# EUROPÄISCHE PATENTANMELDUNG

(11) **EP 2 392 527 A1**
(43) Veröffentlichungstag der Anmeldung: **07.12.2011**
(21) Anmeldenummer: 11168238.1
(22) Anmeldetag: 31.05.2011
(51) Int. Cl.: B65G 47/14

(54) **Vereinzelungsvorrichtung**

(30) Priorität: 01.06.2010 DE 202010007448 U
(71) Anmelder: ZBV-Automation Berse + Elsas GmbH, 53842 Troisdorf (DE)
(72) Erfinder: Berse, Michael Dipl. Ing, Dipl. Wirt. Ing., 53773 Hennef (DE); Duvarci, Seydi Dipl. Ing., 53842 Troisdorf (DE)
(74) Vertreter: Krüger, Florian

(57) **Zusammenfassung**

Eine Vereinzelungsvorrichtung (10) mit einem Beladebereich (1), einem Vereinzelungsbereich (2) und einem Entnahmebereich (4) ist zu einer unabhängigeren Teilevereinzelung mit einer den Beladebereich (1), den Vereinzelungsbereich (2) und/oder den Entnahmebereich (4) entlang einer Kreisbahn verbindenden Transportvorrichtung (12) versehen.

## Beschreibung

Die Erfindung betrifft eine Vereinzelungsvorrichtung zur Vereinzelung und eventuell zur Lageausrichtung von Schüttgutteilen z. B. in automatisierten Produktionsstätten.

Beispielsweise können die Schüttgutteile Werkstücke sein, die in einem Schüttgutbehälter nach dem Zufallsprinzip angeordnet sind und für eine automatisierte Produktion zu vereinzeln sind. Die vereinzelten Teile können anschließend von einem Roboter automatisch erkannt und ergriffen werden, um sie einem nachfolgenden Produktionsschritt zuzuführen. Hierbei werden die Teile der Vereinzelungsvorrichtung in einem Beladebereich zugeführt und über eine Transportvorrichtung einem Vereinzelungsbereich zugeführt. Alternativ kann der Vereinzelungsbereich und der Beladebereich identisch sein, wobei die vereinzelten Teile von der Transportvorrichtung in einen Entnahmebereich zum Entnehmen der vereinzelten Teile überführt werden. In dem Vereinzelungsbereich werden die Teile typischerweise so lange durch Rütteln, Vibrieren, Stoßen, Flippen, Abstreifen, Druckluft, etc. in Bewegung versetzt, bis übereinander liegende Teile derart mit Abstand und entnahmefähiger Lage (z. B. oben/unten) nebeneinander liegen, dass beispielsweise ein Kamerasystem einzelne Teile erkennen und deren Koordinaten an einen Roboterarm zum Ergreifen der Teile übermitteln kann.

Bei den bekannten Vereinzelungsvorrichtungen besteht eine Schwierigkeit darin, dass nach dem Beladevorgang der Vereinzelungsvorgang erfolgt und erst nach ausreichender Vereinzelung die Teile ergriffen und einem nachfolgenden Prozess zugeführt werden können.

Der Erfindung liegt die Aufgabe zugrunde, eine Vereinzelungsvorrichtung zu schaffen, die eine unabhängigere Teilevereinzelung als bisher ermöglicht.

Die erfindungsgemäße Vereinzelungsvorrichtung ist definiert durch die Merkmale von Patentanspruch 1.

Demnach ist die Transportvorrichtung zum Transport der Teile zwischen dem Beladebereich, dem Vereinzelungsbereich und/oder dem Entnahmebereich auf einer Kreisbahn ausgebildet. Hierbei sind als Varianten denkbar, dass die Transportvorrichtung die Teile a) zwischen einem gemeinsamen Belade- und Vereinzelungsbereich und dem Entnahmebereich entlang einer Kreisbahn transportiert, b) die Teile zwischen dem Beladebereich und einem gemeinsamen Vereinzelungs-und Entnahmebereich entlang einer Kreisbahn transportiert und c) die Teile entlang einer Kreisbahn zwischen voneinander getrennten Belade-, Vereinzelungs-und Entnahmebereichen transportiert. Hierbei kann jeweils zwischen dem Vereinzelungs- und dem Entnahmebereich ein weiterer Bereich zur Beruhigung der Teile vorgesehen sein.

Erfindungsgemäß kann somit während des Beladens und/oder Vereinzelns in der Transportvorrichtung zeitgleich eine Entnahme erfolgen. Alternativ können die vereinzelten Teile auch direkt dem Vereinzelungsbereich entnommen werden, während im Beladebereich neue Teile der Transportvorrichtung zugeführt werden.

Vorzugsweise ist der Beladebereich von dem Vereinzelungsbereich getrennt. Es kann der Entnahmebereich zwischen dem Vereinzelungsbereich und dem Beladebereich vorgesehen werden so dass zu gleicher Zeit die Vereinzelungsvorrichtung beladen werden kann, Teile vereinzelt werden können und zuvor vereinzelte Teile dem Entnahmebereich entnommen werden können. Erfindungsgemäß wird also ein Kreisprozess geschaffen, der ein paralleles Beladen, Vereinzeln und/oder Entnehmen von Teilen ermöglicht und somit eine erhebliche Zeitersparnis bewirkt.

Vorzugsweise weist die Transportvorrichtung eine von einem Motor rotatorisch angetriebene Transportscheibe auf. Die Transportscheibe ist als rotierbare Kreisscheibe ausgebildet, auf der die Teile aufliegen und durch Rotation der Scheibe von dem Beladebereich in den Vereinzelungsbereich und in einen möglichen Entnahmebereich transportiert werden. Hierbei kann die Transportscheibe mit konstanter oder getakteter Geschwindigkeit und insbesondere mit regelbarer Geschwindigkeit angetrieben werden.

Als Antrieb ist ein Servomotor, ein Drehstrom- oder ein Wechselstrommotor denkbar. Als mögliches Getriebe kann ein Schnecken- oder ein Winkelgetriebe Einsatz finden. Zudem wäre auch ein pneumatischer Antrieb, z. B. durch einen Drehhubzylinder vorstellbar.

Vorzugsweise ist die Transportscheibe ohne radiale Trennstege zur Unterteilung in Kreissektorabschnitte versehen. Jedoch können auch durch radiale Trennstege unterteilte Kreissektorabschnitte durch Rotation der Transportscheibe nacheinander dem Beladebereich, dem Vereinzelungsbereich und einem möglichen Entnahmebereich zugeführt werden. Je nach Form und Art der Teile können radiale Trennstege zur Unterstützung der einzelnen Bereiche erforderlich sein. Durch die Unterteilung ist vermieden, dass Teile ungewollt in einen anderen Bereich verrutschen. Radiale Trennstege können auch einen Impuls zum Nachfüllen neuer Teile in den Beladebereich generieren.

Zwischen dem Vereinzelungsbereich und dem Entnahmebereich kann ergänzend auch noch ein weiterer Bereich z. B. als Ruhebereich oder als Reservebereich für eine weitere Vereinzelung, Entnahme oder optische Erfassung der Teile vorgesehen sein. Vorteilhafterweise ist ein Ruhebereich vorgesehen, der es ermöglicht, dass nach dem Vereinzelungsvorgang noch in Bewegung befindliche Teile vor dem Erreichen des Entnahmebereichs eine vollständige Ruhelage erreichen, um eine optische Erfassung in dem Entnahmebereich zu erleichtern.

Eine optische Erfassung kann in dem Vereinzelungsbereich und/oder in dem Entnahmebereich durch ein Kamerasystem erfolgen. Die Kamera dient im Vereinzelungsbereich der automatisierten Überprüfung, ob die Teile ausreichend vereinzelt wurden, oder eine weitere Vereinzelung durchzuführen ist. Im Entnahmebereich kann die optische Erfassung eingesetzt werden, um einer Entnahmevorrichtung, wie beispielsweise einem computergesteuerten Roboterarm, die genauen Koordinaten der vereinzelten Teile zu übermitteln, so dass die Teile automatisch entnommen werden können, sowie um einen Impuls zum Nachfüllen neuer Teile im Beladebereich auszulösen. Diese optische Erfassung der Ruheposition kann bereits auch in dem Vereinzelungsbereich erfolgen, wobei der Entnahmevorrichtung die Koordinaten der Teile unter Berücksichtigung der Positionsänderung jedes Teils zwischen Vereinzelungsbereich und Entnahmebereich übermittelt werden.

Vorzugsweise sind zur optischen Erfassung der Vereinzelungsbereich und/oder der Entnahmebereich als Durchleuchtungsbereich vorgesehen, in dem die Transportscheibe und die Stützplatte lichtdurchlässig und mit einer der optischen Kamera gegenüberliegenden Lichtquelle ausgebildet sind. Bei einer Durchleuchtung wird der Schattenwurf der Teile optisch erfasst und auf diese Weise ein erhöhter Kontrast und somit eine genauere optische Teileerfassung geschaffen.

Vorzugsweise ist die Transportscheibe aus einem flexiblen, weichen Material gebildet und liegt auf einer statischen Stützplatte auf. Während die Transportscheibe rotatorisch angetrieben wird, verbleibt die Stützplatte immer in ihrer statischen Position, so dass die Transportscheibe auf der Stützplatte rotierend gleitet. Hierbei kann die Stützplatte mit Öffnungen in dem Vereinzelungsbereich versehen sein. Durch die Öffnungen können motorisch angetriebene Stoßzylinder der Vereinzelungsvorrichtung hindurch stoßen, um die Transportscheibe zur Teilevereinzelung in Bewegung zu versetzen. Eine optische Erfassung kann zur Kontrolle der Vereinzelung dienen und einem computergestützten Steuerungssystem bei nicht ausreichender Vereinzelung den Befehl zu einem erneuten Antreiben der Zylinder geben. Alternativ können pneumatische Zylinder, elektrische Excenter, mechanische Abstreifer, Vibratoren, Magnete oder Druckluft z. B. durch die Öffnungen oder auf eine andere Weise auf die Transportscheibe wirken, um diese zur Teilevereinzelung in Bewegung zu versetzen.

In dem Entnahmebereich kann vorteilhafter Weise eine Vakuumvorrichtung zum Ansaugen der Transportscheibe auf die Stützplatte vorgesehen sein. In entsprechender Weise kann in einer möglichen Ruhe- und/oder Reservezone zwischen dem Vereinzelungsbereich und dem Entnahmebereich eine Vakuumansaugung erfolgen, um eine Übertragung der während der Vereinzelung erfolgenden Bewegung der Transportscheibe auf Abschnitte mit bereits vereinzelten Teilen zu verhindern. Die Vakuumansaugung sollte hierbei vorzugsweise während der Bewegung der Transportscheibe in dem Vereinzelungsbereich erfolgen. Vorzugsweise erfolgt die Vakuumansaugung derart, dass die Transportscheibe auch im angesaugten Zustand über die Stützplatte gleiten kann.

In einem radial inneren und/oder in einem radial äußeren Bereich der Transportscheibe können mechanische Abweiser vorgesehen sein, die Teile aus inneren und/oder äußeren Randbereichen der Scheibe in einen mittleren Bereich verschieben, wenn die Transportscheibe rotiert.

Im Folgenden werden anhand der Figuren Ausführungsbeispiele der Erfindung näher erläutert. Es zeigen:
- Fig. 1: einen Längsschnitt durch ein erstes Ausführungsbeispiel gemäß der Linie I-I in Figur 2 und
- Fig. 2: eine Draufsicht auf das erste Ausführungsbeispiel aus Richtung des Pfeils II in Figur 1,
- Fig. 3: eine schematische Draufsicht auf ein zweites Ausführungsbeispiel,
- Fig. 4: eine schematische Draufsicht auf ein drittes Ausführungsbeispiel,
- Fig. 5: eine schematische Draufsicht auf ein viertes Ausführungsbeispiel und
- Fig. 6: eine schematische Draufsicht auf ein fünftes Ausführungsbeispiel.

Die Vereinzelungsvorrichtung 10 weist eine Transportvorrichtung 12 mit einer flexiblen Transportscheibe 14 in Form eines kreisrunden weichen Lappens aus einem weichen PVC-Material auf. Die Transportscheibe 14 ist auf einer vertikalen Antriebswelle 16 in ihrem Mittelpunkt gelagert und mit einer Klemmnabe 18 an der Welle 16 befestigt. Die Antriebswelle 16 wird von einem Elektromotor 20 rotatorisch angetrieben.

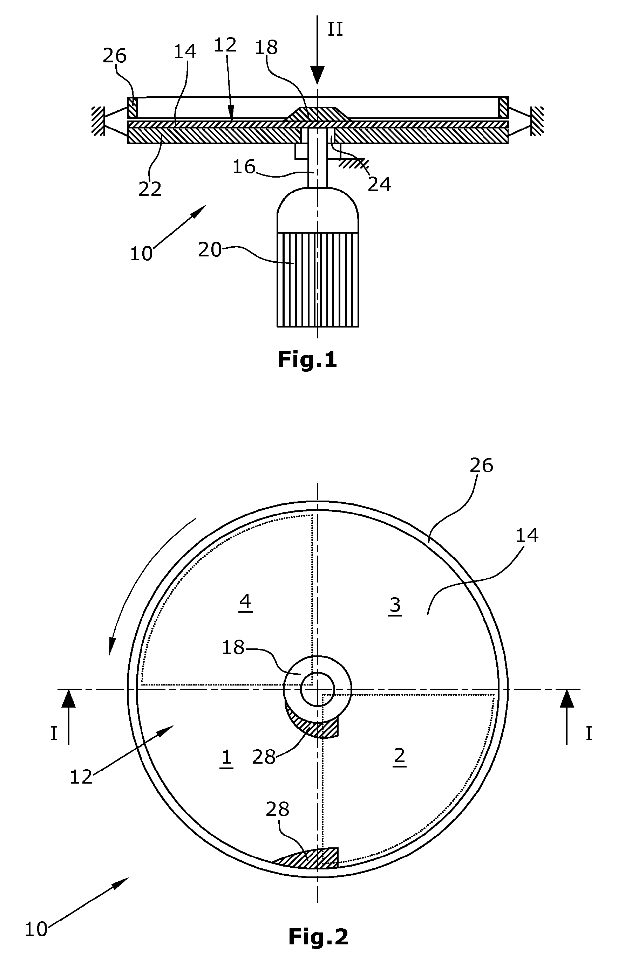

Eine ringförmige Stützplatte 22 ist statisch, also nicht rotierend, zum Stützen der Transportscheibe vorgesehen. Die Stützplatte 22 ist mit einer Mittelöffnung 24 für die Antriebswelle 16 der Transportscheibe 14 versehen. Die Stützplatte 22 bildet eine gleichmäßige und ebene Auflagefläche für die Transportscheibe 14. In Figur 1 ist angedeutet, dass die Stützplatte 22 im Bereich ihrer inneren und äußeren Ränder statisch gehalten wird.

Ein äußerer Begrenzungsring 26 für zu vereinzelnde oder bereits vereinzelte Schüttgutteile auf der Transportscheibe 14 ist im Bereich des radial äußeren Randes oberhalb der Transportscheibe 14 angeordnet.

Ferner sind oberhalb der Transportscheibe 14 mechanische Abweiser 28 in radial inneren und äußeren Bereichen zwischen dem Beladebereich 1 und dem Vereinzelungsbereich 2 vorgesehen, um durch Rotation der Transportscheibe 14 Teile aus den radial inneren und äußeren Bereichen in einen mittleren Bereich zu verschieben.

Die Vereinzelungsvorrichtung weist kreissektorförmige Bereiche als Beladebereich 1, Vereinzelungsbereich 2, Ruhebereich 3 und Entnahmebereich 4 auf. Diese Bereiche 1, 2, 3, 4 sind statisch, also nicht rotierend, derart angeordnet, dass die Transportscheibe bei Rotation jeden der Bereiche 1 - 4 nacheinander durchläuft.

In dem Beladebereich 1 werden die zu vereinzelnden Teile als Schüttgut auf die Transportscheibe 14 geschüttet. Durch computergesteuerte, getaktete Rotation werden die Teile anschließend von dem Beladebereich in den Vereinzelungsbereich 2 transportiert. In dem Vereinzelungsbereich 2 ist die Stützplatte 22 mit in den Figuren nicht dargestellten Öffnungen versehen, durch die Stoßzylinder motorisch angetrieben von unten nach oben durch die Stützplatte 22 hindurch gegen die Transportscheibe 14 stoßen. Auf diese Weise wird die Transportscheibe 14 in dem Vereinzelungsbereich 2 in rhythmische Bewegung versetzt, durch welche übereinander liegende Teile voneinander getrennt und in eine entnahmefähige Lage gedreht werden.

Der Vereinzelungsbereich ist als in den Figuren schematisch gepunktet markierter Durchleuchtungsbereich mit einer unterhalb der Transportscheibe 14 und der Stützplatte 22 angeordneten Lichtquelle und mit einer oberhalb angeordneten, den Vereinzelungsbereich optisch erfassenden Kamera versehen. Ein entsprechender Durchleuchtungsbereich ist auch in dem Entnahmebereich 4 vorgesehen. In diesen Bereichen ist die Stützplatte lichtdurchlässig ausgebildet. Auch die Transportscheibe 14 ist lichtdurchlässig ausgebildet. Die oberhalb des Vereinzelungsbereichs 2 angeordnete und in den Figuren nicht dargestellte Kamera erfasst die Teile nach jedem Vereinzelungsvorgang und löst einen automatischen Steuerungsbefehl aus, wonach die Teile bei unzureichender Vereinzelung erneut zur Bewegung durch die Stützzylinder angeregt werden oder wonach die Teile bei ausreichender Vereinzelung durch weiteres Rotieren der Transportscheibe 14 in den Ruhebereich 3 überführt werden. In dem Ruhebereich 3 können mögliche, durch die Vereinzelung noch in Bewegung befindliche, Teile eine Ruheposition erlangen, bis sie durch Weiterrotation der Transportscheibe 14 in den Entnahmebereich 4 gelangen.

Der Entnahmebereich 4 ist in entsprechender Weise, wie der Vereinzelungsbereich 2, als Durchleuchtungsbereich zur optischen Erfassung ausgebildet, wobei eine oberhalb des Entnahmebereichs 4 angeordnete Kamera die Position der Teile automatisch erfasst und an einen Roboterarm übermittelt, der die vereinzelten Teile computergesteuert und vollautomatisiert ergreift und einem nachfolgenden Prozess zuführen kann. Teile, die im Entnahmebereich nicht entnommen werden können, werden ausgeschleust oder verbleiben zunächst im System und werden weiter in den Beladebereich 1 rotiert, evtl. zusätzlich mit Teilen aufgefüllt und im Vereinzelungsbereich 2 erneut vereinzelt.

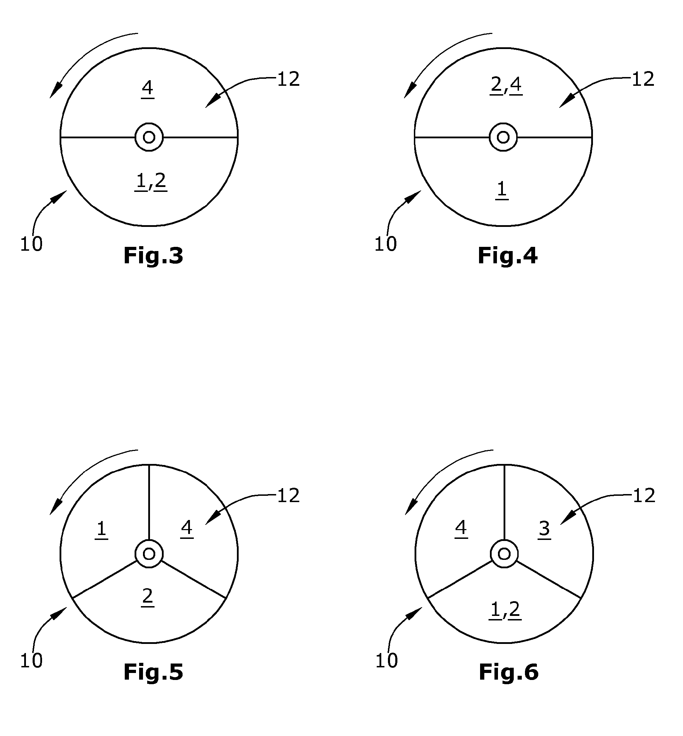

Die schematisch vereinfachten Darstellungen in den Figuren 3 - 6 zeigen weitere Ausführungsbeispiele. Bei dem Ausführungsbeispiel in Figur 3 sind der Beladebereich 1 und der Vereinzelungsbereich 2 als ein gemeinsamer räumlicher Bereich ausgebildet und räumlich von dem Entnahmebereich 4 getrennt. Die Transportvorrichtung 12 verbindet den gemeinsamen Belade- und Vereinzelungsbereich 1, 2 mit dem räumlich getrennten Entnahmebereich 4 auf einer Kreisbahn.

Bei dem Ausführungsbeispiel in Figur 4 sind der Vereinzelungsbereich 2 und der Entnahmebereich 4 in einem gemeinsamen räumlichen Bereich vorgesehen und räumlich von dem Beladebereich 1 getrennt. Die Transportvorrichtung 12 verbindet den Beladebereich 1 und den gemeinsamen Vereinzelungs- und Entnahmebereich 2, 4 auf einer Kreisbahn.

Bei dem Ausführungsbeispiel gemäß Figur 5 sind der Beladebereich 1, der Vereinzelungsbereich 2 und der Entnahmebereich 4 räumlich voneinander getrennt und werden durch die Transportvorrichtung 12 entlang einer Kreisbahn miteinander verbunden.

Bei dem Ausführungsbeispiel in Figur 6 ist zwischen einem gemeinsamen Belade-und Vereinzelungsbereich 1, 2 und einem räumlich getrennten Entnahmebereich 4 ein zusätzlicher separater Ruhebereich 3 vorgesehen. Der gemeinsame Belade- und Vereinzelungsbereich 1, 2, der Ruhebereich 3 und der Entnahmebereich 4 werden auf einer Kreisbahn durch die Transportvorrichtung miteinander verbunden.

## Patentansprüche

1. Vereinzelungsvorrichtung (10) mit einem Beladebereich (1) zum Beladen der Vereinzelungsvorrichtung (10) mit zu vereinzelnden Teilen, mit einem Vereinzelungsbereich (2) zur Vereinzelung der Teile und mit einem Entnahmebereich (4) zum Entnehmen der vereinzelten Teile, wobei eine Transportvorrichtung (12) zum Transport der Teile in den Entnahmebereich (4) vorgesehen ist,
**dadurch gekennzeichnet,**
**dass** die Transportvorrichtung (12) zum Transport der Teile entlang einer Kreisbahn zwischen dem Beladebereich (1), dem Vereinzelungsbereich (2) und/oder dem Entnahmebereich (4) ausgebildet ist.

2. Vereinzelungsvorrichtung (10) nach Anspruch 1, **dadurch gekennzeichnet, dass** der Entnahmebereich (4) entlang der Kreisbahn zwischen dem Vereinzelungsbereich (2) und dem Beladebereich (1) angeordnet ist.

3. Vereinzelungsvorrichtung (10) nach Anspruch 2, **dadurch gekennzeichnet, dass** die Transportvorrichtung (12) eine motorisch rotierend angetriebene Transportscheibe (14) aufweist.

4. Vereinzelungsvorrichtung (10) nach Anspruch 3, **dadurch gekennzeichnet, dass** der Beladebereich (1), der Vereinzelungsbereich (2) und/oder der Entnahmebereich (4) jeweils kreissektorförmig ausgebildet sind.

5. Vereinzelungsvorrichtung (10) nach Anspruch 3 oder 4, **dadurch gekennzeichnet, dass** die Scheibe (14) aus einem flexiblen Material gebildet ist und auf einer statischen Stützplatte (22) aufliegt.

6. Vereinzelungsvorrichtung (10) nach Anspruch 5, **dadurch gekennzeichnet, dass** die Stützplatte (22) in dem Vereinzelungsbereich (2) Öffnungen aufweist, um durch die Öffnungen hindurch die Transportscheibe (14) zur Teilevereinzelung in Bewegung versetzen zu können.

7. Vereinzelungsvorrichtung (10) nach Anspruch 5 oder 6, **dadurch gekennzeichnet, dass** eine Vakuumvorrichtung zum Ansaugen der Transportscheibe (14) auf die Stützplatte (22) zumindest in dem Entnahmebereich (4) vorgesehen ist.

8. Vereinzelungsvorrichtung (10) nach einem der Ansprüche 3 bis 7, **dadurch gekennzeichnet, dass** die Transportscheibe (14) radiale Trennstege zur Unterteilung in Kreissektorabschnitte aufweist.

9. Vereinzelungsvorrichtung (10) nach einem der vorhergehenden Ansprüche, **dadurch gekennzeichnet, dass** der Vereinzelungsbereich (2) und/oder der Entnahmebereich (4) als Durchleuchtungsbereich mit einer den Vereinzelungsbereich (2) bzw. den Entnahmebereich (4) optisch erfassenden Kamera ausgebildet sind.

10. Vereinzelungsvorrichtung (10) nach einem der vorhergehenden Ansprüche, **dadurch gekennzeichnet, dass** zwischen dem Vereinzelungsbereich (2) und dem Beladebereich (1) und insbesondere zwischen dem Vereinzelungsbereich (2) und dem Entnahmebereich (4) ein Ruhebereich (3) für die vereinzelten Teile vorgesehen ist.
